Europäisches Patentamt

**European Patent Office**

Office européen des brevets

(11) Publication number: **0 005 440**
**B1**

# EUROPEAN PATENT SPECIFICATION

(45) Date of publication of patent specification: **18.01.84**

(21) Application number: **79101014.3**

(22) Date of filing: **03.04.79**

(51) Int. Cl.³: **F 16 L 9/12,** **H 05 F 3/02,**
**B 29 D 7/00, F 16 L 47/02**

(54) Filament-reinforced plastic article and its method of manufacture.

(30) Priority: **03.04.78 US 892737**

(43) Date of publication of application:
**28.11.79 Bulletin 79/24**

(45) Publication of the grant of the patent:
**18.01.84 Bulletin 84/3**

(84) Designated Contracting States:
**DE GB NL**

(56) References cited:
**DE - A - 2 010 021**
**DE - B - 1 088 295**
**DE - C - 1 088 295**
**FR - A - 1 308 575**
**FR - A - 2 252 192**
**LU - A - 41 219**
**US - A - 3 635 256**
**US - A - 3 914 002**

(73) Proprietor: **AMERON, INC.**
**4700 Ramona Boulevard**
**Monterey Park California 91754 (US)**

(72) Inventor: **Bordner, Dalton William**
**2949 Arlington Avenue**
**Fullerton California 92635 (US)**

(74) Representative: **Patentanwälte Dipl.-Ing. A.**
**Grünecker, Dr.-Ing. H. Kinkeldey, Dr.-Ing. W.**
**Stockmair,**
**Dr. rer. nat. K. Schumann, Dipl.-Ing. P. Jakob, Dr.**
**rer. nat. G. Bezold Maximilianstrasse 58**
**D-8000 München 22 (DE)**

Courier Press, Leamington Spa, England.

Filament-reinforced plastic article and its method of manufacture

This invention relates to improved electrically conductive, filament-reinforced plastic articles, such as plastic sheets and pipe, and to a method of its manufacture.

Plastic pipe has been used for many years to provide corrosion-proof conduits in many different types of industries. A disadvantage of prior art plastic pipe is that it can develop a dangerous electrostatic charge because of its low electrical conductivity. For example, Lloyd's of London requires that all fiberglass pipe used to handle petroleum products on board ship have a surface resistivity of less than $10^9$ ohms, when tested in accordance with ASTM D257-76 (Standards of the American Society for Testing Material) so that static charges built up in the pipe by fluid flow may be conducted to ground. Conventional fiberglass-reinforced pipe made before this invention has a surface resistivity of about $10^{12}$ ohms, and therefore is unsatisfactory for such applications. Economically priced, electrically conductive plastic sheets would also find wide use to shield against radio frequency electromagnetic radiation.

Before this invention, conductive materials, such as graphite, carbon, silver aluminum, and copper powder and particles, have been incorporated into rubber and plastic products to make them more conductive to prevent static charge buildup, or to make radio frequency shields. Chopped metallic fibers and chopped conductive glass filaments have also been used in plastic products to increase electrical conductivity. The article entitled "Conductive Polymeric Compositions" in Polymer Engineering and Science, Dec. 1977, Vol. 17, No. 12, discloses the use of conductive fibers, spheres, flakes, and irregular particulates of conductive materials to increase the thermal and electrical conductivity of plastic articles. The article states that fibrous conductors improve conductivity more significantly than spheres, flakes, or irregular particles. However, the article limits its disclosure to particles and short glass fibers having a maximum aspect ratio of no more than approximately 35:1. The aspect ratio is the ratio of the length of a conductive member to its diameter. Moreover, the use of conductive powder, particles, and chopped filaments is expensive, because relatively large amounts of these materials are required to achieve the necessary modification of electrical conductivity.

Thus, although the advantages of electrically conductive plastic have long been known, their use has been limited in many applications, because they have not been economically feasible before this invention.

In making conventional filament-reinforced plastic pipe, hundreds of filaments of reinforcing material, such as fiberglass, nylon, etc., are combined to form an "end" or roving.

About 15 ends are combined to form a "strand", which includes several thousand individual filaments; and between about ten and about 40 strands are combined to form a tape, web, or band, which is saturated with liquid resin to coat the individual filaments with plastic. The resin-saturated band is wound onto a rotating mandrel. The winding path is usually a simple helix at an angle of about 54° to the mandrel axis of rotation. A uniformly reinforced pipe wall is formed by winding the band in overlapping helices, first to the right along the mandrel and then to the left. The filaments are substantially continuous, unidirectional fibers, and may be mineral fibers, such as glass or asbestos; animal fibers, such as wool; vegetable fibers, such as cotton; or synthetic fibers, such as nylon, rayon, dacron, orlon, and the like.

The resin or adhesive used to impregnate the band and wet the filaments can be any suitable thermosetting or thermoplastic resin used in winding or laminating procedures. For example, binders containing a thermosetting resin, such as epoxy, polyester, vinyl ester, furan, phenolformaldehyde, or the like, or binders containing a thermoplastic resin, such as polyvinyl chloride, polyvinylidene chloride, or the like can be used.

U.S. Patent No. 3,499,815 to Hof, and U.S. Patent No. 3,519,520 to Newman describe apparatus and methods for making conventional fiber-reinforced plastic pipe. Such pipe is satisfactory under many conditions where resistance to corrosion is required, but it is of limited use where build-up of electrostatic charge creates a hazardous condition.

U.S. Patent No. 3,070,132 to Sheridan; U.S. Patent No. 3,555,170 to Petzetakis; U.S. Patent No. 3,580,983 to Jackson; U.S. Patent No. 3,958,066 to Imamura et al.; and U.S. Patent No. 3,963,856 to Carlson et al. describe various conventional ways of increasing the thermal and electrical conductivity of plastic products by using metal wires or particles of metal or carbon imbedded in the product. As indicated above, this technique is expensive and has not been widely used to produce plastic pipes, for example, on a commercial basis.

From DE—C 10 88 295 a filament-reinforced tube is known having a low electrical resistivity. Said tube comprises a fluid-impermeable inner wall made of rubber and at least one layer formed by a textile fabric and electrically conductive filaments. The conductive filaments are disposed in such a way that they form in adjacent layers a crisscross pattern and make electrical contact at the points where they cross.

FR—A 1 308 675 relates to a tube made of two walls connected by a helically-wound spacer device in order to increase the mechanical resistance.

US—A 3 635 256 refers to two embodiments of a wear-resistant tube. In the first embodiment an inner gel coat layer is surrounded by an exterior layer, and the resin matrix of the inner layer contains finely divided particles of copper. According to the second embodiment, the tube is constructed having an inner layer of helically wound glass filaments impregnated with a thermosetting resin system within which particles of copper are uniformly distributed.

The object of the invention is to provide a relatively inexpensive filament-reinforced plastic material with a sufficiently high electrical conductivity to satisfy safety requirements for use in plastic pipe on board ship, and to make effective radio frequency shields.

According to the invention, this object is achieved by a filament-reinforced article of the type described in the pre-characterizing clause of claim 1, in which the electrically conductive filaments are distributed throughout the entire thickness of the wall and in which all filaments are coated with plastic. This provides a plastic article which may be a pipe or a sheet and which has a surprisingly high electrical conductivity, and yet contains very little metal.

The preferred method of the invention based on the method known by US—A 3 635 256 is characterized in claim 9. If the final product is to be plastic pipe, the resin is cured to a sufficiently rigid condition on the mandrel to permit its removal without losing its tubular shape.

If the final product is to be a sheet of plastic which may be molded into a shield against radio frequency electromagnetic radiation, the curing of the resin on the mandrel is stopped short of completion, so the wall of the article is still flexible. While still on the mandrel, the wall of the tubular article or laminate is cut through along a line parallel to the longitudinal axis of the mandrel to make a sheet which can be formed and cured into a rigid article of the desired shape. The tubular wall can also be cut in other directions. For example, it can be cut in a spiral along a line perpendicular to the bands.

The invention is explained on the basis of a schematic representation of an embodiment in the drawing in which

FIG. 1 is a fragmentary elevation, partly broken away, of two adjacent ends of sections of pipe made in accordance with this invention and bonded together with a conductive adhesive;

FIG. 2 is a cross-sectional view of a conductive glass filament used in making the pipe of this invention; and

FIG. 3 is an enlarged cross-sectional view taken in the area of 3—3 of FIG. 1.

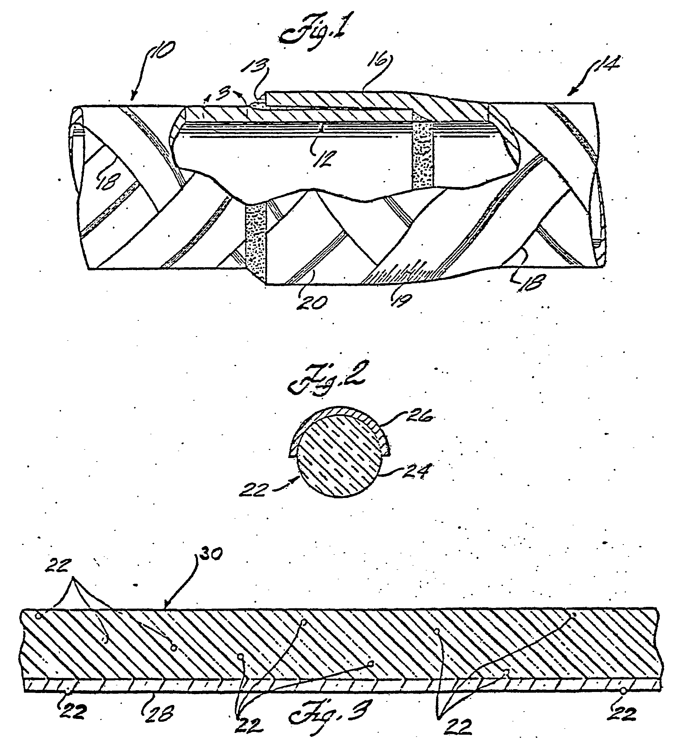

Referring to FIG. 1, a first pipe section 10, having a male end 12, is bonded by a layer 13 of adhesive to a second pipe section 14, having a female end 16. The adhesive layer is conventional epoxy resin which includes about 7% by weight of conductive filaments chopped to a length of about 3/8 inch.

Each section of pipe was formed by wrapping resin-saturated bands (webs or tapes) 18 of continuous filaments in a helical pattern around a rotating mandrel (not shown). The winding path was a simple helix at an angle of about 54° to the mandrel axis of rotation. A uniformly reinforced pipe wall was thus formed by depositing the bands, first to the right along the mandrel and then to the left to form overlapping layers. Each band included nineteen strands 19 (not shown in detail) of conventional continuous fiberglass roving and one strand 20 of continuous conductive fiberglass filament. The twenty strands formed a band approximately 2″ wide. Each strand contained 15 "ends", and each "end" contained 408 individual filaments, making about 6,000 filaments per strand. The amount of conductive fiberglass filaments can be reduced by using more strands of conventional glass in a band for each strand of conductive filament. For example, the band width can be 5″ instead of 2″, while still using only one strand of conductive roving in the band. The conductive filaments may be of the type described in an article entitled, "Conductive Polymeric Compositions", by Donald M. Bigg, appearing in the December 1977 issue of Polymer Engineering and Science. Conductive filaments useful in this invention may also be obtained from MBA Associates. Such a product typically yields from 220 yards to 1,200 yards of strand per pound.

FIG. 2 shows a typical conductive filament 22 in cross-section. It includes a conventional cylindrical glass fiber 24 about 0.8 mil in diameter. A coating 26 of aluminum 0.1 mil thick is deposited on the glass fiber for its entire length, but extends only one-half way around the fiber so that only one-half the surface of the fiber is coated with aluminum. Of course, the conductive filaments can be entirely coated with aluminum, or any other suitable material.

The filaments used in this invention, both conductive and non-conductive, are continuous throughout the length of the article which they reinforce. Thus, the continuous conductive filaments have enormous aspect ratios (ratio of length to diameter) of 500:1, or greater. For example, a continuous conductive filament in a pipe section 20 feet long has an aspect ratio greater than 240,000:1. The filaments can be mineral fibers, such as glass or asbestos; animal fibers, such as wool; vegetable fibers, such as cotton; or synthetic fibers, such as nylon, rayon, dacron, orlon, and the like.

The resin or adhesive used to impregnate the band and coat the filaments can be any suitable thermosetting or thermoplastic resin used in winding or laminating procedures. For example, binders containing a thermosetting resin, such as epoxy, polyester, melamine-formaldehyde, urea-formaldehyde, phenolformaldehyde, or the like, or binders containing a thermoplastic resin, such as polyvinyl chloride, polyvinylidene chloride, or the like can be used.

A pipe such as the one shown in FIG. 1 was made to have a nominal diameter of 2″ (an average o.d. of 2.384 inches and an average i.d. of 2.098 inches). The pipe included a conventional liner 28 with an average wall thickness of 0.023 inch, thus giving an average reinforced wall thickness of 0.120 inch. The liner (known in the industry as C-veil reinforced liner) was wound on the mandrel first, followed by two layers of the epoxy resin-saturated bands of conventional fiberglass filaments and conductive glass filaments. Each layer included two circuits, which each required one pass of a band in each direction along the mandrel. Thus, the pipe was made by first wrapping the mandrel with one pass of 10-mil C-veil material with a 2/3 overlap. A first layer was then formed by making a pass in one direction with the band and then making a pass in the opposite direction to form a first circuit. An additional circuit was similarly formed to complete the first layer. Ultimately, two layers were formed to produce the final wall pipe thickness. In all, eight passes along the mandrel were required with the band to produce two circuits per layer, each circuit including a pass in each direction along the mandrel. Other methods and materials, well known to those skilled in making plastic pipe, can be used.

After the pipe was formed, the resin was gelled under infrared lights, and then post-cured for one hour at 300°F.

The pipe contained approximately 2.9% conductive glass or about 0.4% metal by weight. The d.c. electrical resistance of the pipe tested in accordance with ASTM D257-76 was $8.3 \times 10^1$ ohms, which was well under the maximum resistance of $10^9$ ohms set by Lloyd's of London. A conventional fiberglass-reinforced plastic pipe made in exactly the same manner, except omitting the strand of conductive glass roving in the band used to build up the pipe wall, had a resistance of $2.68 \times 10^{12}$ ohms.

A similar conductive pipe was made as described above, except that it contained only 1.3% conductive glass, or about 0.2% metal by weight. It also had a resistivity well below the limit set by Lloyd's of London.

Since the C-veil material which lines the pipe interior does not include any electrically conductive filaments, its electrical resistivity is higher than that of the exterior surface of the pipe. For those applications where low resistivity is required for the pipe interior, and the chemical inertness of the C-veil material is not required, it can be omitted. Alternatively, a strand 20 (as shown in FIG. 3) of conductive filaments is wound around the mandrel before applying the C-veil liner 28 to increase the electrical conductivity of the inside surface of the pipe. The initial strand of conductive filaments and the C-veil liner are each saturated with liquid resin before being wrapped around the mandrel so they are bonded to each other when the resin is cured.

If the plastic material of this invention is used to make a sheet for radio frequency shielding, a procedure similar to that for making pipe is followed. However, the C-veil is omitted, and a first protective sheet (not shown) of polyethylene plastic (not shown), or any other suitable material to which the epoxy resin will not readily adhere, is first wrapped around the mandrel. Thereafter, a tubular laminate is formed around the mandrel exactly as described above. A second protective sheet (not shown) of polyethylene plastic is wrapped around the exterior of the laminate. Thereafter, and before the resin has set to a permanently rigid state, the second protective sheet and the wall of the laminate on the mandrel are cut through along a line extending substantially parallel to the longitudinal axis of the mandrel. Alternatively, the second sheet and laminate wall are cut through on a spiral path (or any other desired path) perpendicular to one set of the helices. The laminate is then removed from the mandrel as a flat sheet. The sheet is stored, in a refrigerated space if necessary, to prevent further curing of the resin until the sheet is to be formed into its final configuration. At that time, the sheet is forced into the desired shape, then the protective sheets are removed, and the resin then cured to a rigid state. The product provides a shield against radio frequency radiation, even though it contains less than about 0.5% metal by weight.

The sheet form of the invention is as shown in detail in FIG. 3. It includes a wall 30 made up of epoxy resin and filaments of conventional fiberglass (not shown) and fiberglass filaments 22 coated with aluminum. For the sake of simplicity, only the strands of the conductive fiberglass filaments are shown.

From the foregoing description, it will be apparent that the process and plastic article of this invention can be used to make a great variety of electrically conductive articles, including pipe and shaped members, such as pipe fittings, structural members, and the like.

The surprising result of this invention is that although the continuous conductive filaments form such a small part of the total article, and even though the conductive filaments are coated with non-conducting cured resin, the final product has an exceptionally low surface resistivity, which makes it ideal to use in those applications where the buildup of electrostatic charges cannot be tolerated. The product also provides r-f shielding, even though it contains so little metal.

## Claims

1. A filament-reinforced article (10) having a low electrical resistivity, the article (10) being made of overlapping bands (18) of filaments, a minor portion of the filaments (22) in the bands (18) being electrically conductive and are disposed along helical paths in opposite directions in successive layers forming a wall so each layer contains conductive filaments and so the conductive filaments in adjacent layers form a crisscross pattern and make electrical contact at the points where they cross, characterized by the following:

a. the electrically conductive filaments (22) are distributed throughout the entire thickness of the wall (30) and

b. all filaments are coated with plastic.

2. An article (10) according to claim 1, characterized in that the electrically conductive filaments (22) are cylindrical fiberglass filaments coated with metal.

3. An article (10) according to claim 2, characterized in that the electrically conductive filaments (22) are metal-coated halfway around the fiberglass filaments.

4. An article (10) according to claim 1, characterized in that the aspect ratio (ratio of length to diameter) of the conductive filaments (22) is greater than 500.

5. An article (10) according to claim 1 or 2, characterized in that the band (18) consists of 19 strands (19) of conventional continuous fiberglass filaments and one strand (20) of conductive fiberglass filament (22).

6. An article (10) according to any one of the preceding claims, the article being a pipe (10), to the inner surface of which a liner (28) is bonded, characterized in that a strand (20) of electrically conductive filaments (22) is bonded to the inside surface of the liner (28).

7. An article (10) according to any one of the preceding claims in which the article is a series of elongated tubes fitted together at their adjacent ends (12, 16), and bonded together with an adhesive (13) which contains electrically conductive materials to form conduit.

8. An article (10) according to any one of the preceding claims, characterized in that the resistivity is less than $10^9$ ohms when tested in accordance with ASTM D257-76.

9. A method of making a filament reinforced article according to any one of the preceding claims, in which the method comprises coating bands (18) of continuous filaments with liquid plastic resin, wrapping the bands (18) in overlapping patterns around a mandrel to form a tubular article (10) and thereafter curing the liquid plastic resin to solid form, characterized in that a minor portion of the filaments (22) in at least one of the bands (18) is electrically conductive, so that they make electrical contact at the points where they cross.

10. A method according to claim 9, characterized in that one strand (20) of continuous conductive filaments (22) is disposed in each band (18).

11. A method according to claim 9 or 10, characterized in that the method includes the step of cutting through the tubular article (10) on the mandrel to form a sheet, and thereafter removing the sheet from the mandrel.

Patentansprüche

1. Faserverstärkter Gegenstand (10), der einen niedrigen spezifischen elektrischen Widerstand hat und aus einander überlappenden Bändern (18) aus Fasern besteht, wobei eine kleinere Zahl der Fasern (22) in den Bändern (18) elektrisch leitend ist und auf schraubenförmigen Bahnen verläuft, die in aufeinanderfolgenden, eine Wand bildenden Lagen in entgegengesetzten Richtungen laufen, so daß jede Lage leitende Fasern hat, die in den übereinanderliegenden Lagen ein Kreuzmuster bilden und an den Kreuzungspunkten, an denen sie sich berühren, jeweils einen elektrischen Kontakt herstellen, gekennzeichnet durch die folgenden Merkmale:

a. die elektrisch leitenden Fasern (22) sind über die gesamte Dicke der Wand (30) verteilt

b. alle Fasern sind mit Kunststoff beschichtet.

2. Gegenstand nach Anspruch 1, dadurch gekennzeichnet, daß die elektrisch leitenden Fasern (22) zylindrische Glasfasern sind, die mit Metall beschichtet sind.

3. Gegenstand nach Anspruch 2, dadurch gekennzeichnet, daß die elektrisch leitenden Glasfasern (22) über den halben Umfang mit Metall beschichtet sind.

4. Gegenstand nach Anspruch 1, dadurch gekennzeichnet, daß die Verhältnis Länge: Durchmesser der leitenden Fasern (22) größer als 500 ist.

5. Gegenstand nach Anspruch 1 oder 2, dadurch gekennzeichnet, daß das Band (18) aus neunzehn Strängen (19) herkömmlicher, kontinuierlicher Glasfasern und einem Strang (20) aus leitender Glasfaser (22) besteht.

6. Gegenstand nach einem der vorhergehenden Ansprüche, wobei der Gegenstand ein Rohr (10) ist, auf dessen Innenfläche eine Deckschicht (28) aufgebracht ist, dadurch gekennzeichnet, daß ein Strang (20) aus elektrisch leitenden Fasern (22) mit der Innenseite der Deckschicht (28) fest verbunden ist.

7. Gegenstand nach einem der vorhergehenden Ansprüche, wobei der Gegenstand eine Reihe aufeinanderfolgender, länglicher Rohre ist, die an ihren zusammenstoßenden Enden (12, 16) ineinander eingreifen und durch einen Klebstoff miteinander verbunden sind, welcher elektrisch leitendes Material zur Herstellung einer Leitung enthält.

8. Gegenstand nach einem der vorhergehenden Ansprüche, dadurch gekennzeichnet, daß der spezifische elektrische Widerstand bei Prüfung gemäß ASTM D 257-76 kleiner als $10^9$ Ohm ist.

9. Verfahren zur Herstellung eines faserverstärkten Gegenstandes nach einem der vorhergehenden Ansprüche, wobei bei dem Verfahren die Bänder (18) aus durchgehenden Fasern mit einem flüssigen Kunstharz beschichtet und in einander überlappenden Mustern auf einen Dorn gewickelt werden, wodurch ein rohrförmiger Gegenstand (10) gebildet wird, und wobei anschließend das flüssige Kunstharz zu einer festen Form ausgehärtet wird, dadurch gekennzeichnet, daß ein kleinerer Teil der Fasern (22) in wenigstens einem Band (18) elektrisch leitend ist, so daß sie an den Kreuzungspunkten, an denen sie sich berühren, elektrische Kontakte bilden.

10. Verfahren nach Anspruch 9, dadurch gekennzeichnet, daß in jedem Band (18) ein Strang (20) kontinuierlicher, leitender Fasern (22) vorgesehen wird.

11. Verfahren nach Anspruch 9 oder 10, dadurch gekennzeichnet, daß der rohrförmige Gegenstand (10) auf dem Dorn durchschnitten wird, wodurch ein flächiger Gegenstand entsteht, der anschließend von dem Dorn abgenommen wird.

## Revendications

1. Article à filaments renforcés (10) ayant une faible résistivité électrique, l'article (10) étant constitué de bandes imbriquées (18) de filaments, une petite partie des filaments (22) des bandes (18) étant électriquement conducteurs et disposés le long de voies hélicoïdales dans des directions opposées dans des couches successives formant une paroi de façon que chaque couche contienne des filaments conducteurs et que les filaments conducteurs dans des couches voisines forment une structure entrecroisée et établissent un contact électrique aux points où ils se croisent, caractérisé en ce que:

a. les filaments électriquement conducteurs (22) sont répartis sur toute l'épaisseur de la paroi (30) et

b. tous les filaments sont recouverts de plastique.

2. Article (10) selon la revendication 1, caractérisé en ce que les filaments électriquement conducteurs (22) sont des filaments cylindriques en fibre de verre recouverts de métal.

3. Article (10) selon la revendication 2, caractérisé en ce que les filaments électriquement conducteurs (22) sont à moitié recouverts de métal autour des filaments en fibre de verre.

4. Article (10) selon la revendication 1, caractérisé en ce que le rapport d'aspect (rapport de la longueur au diamètre) des filaments conducteurs (22) est supérieur à 500.

5. Article (10) selon la revendication 1 ou 2, caractérisé en ce que la bande (18) est constituée de 19 brins (19) de filaments continus en fibre de verre classiques et d'un brin (20) de filament conducteur en fibre de verre (22).

6. Article selon l'une quelconque des revendications précédentes, l'article étant un tuyau (10) à la surface intérieure duquel est liée une gaine protectrice (28), caractérisé en ce qu'un brin (20) des filaments électriquement conducteurs (22) est lié à la surface intérieure de la gaine protectrice (28).

7. Article (10) selon l'une quelconque des revendications précédentes, dans lequel l'article est une série de tubes allongés ajustés entre eux à leurs extrémités voisines (12, 16), et liés entre eux avec un adhésif (13) qui contient des matériaux électriquement conducteurs pour former un conduit.

8. Article (10) selon l'une quelconque des revendications précédentes, caractérisé en ce que la résistivité est inférieure à $10^9$ ohms quand elle est contrôlée selon la norme ASTM D257-76.

9. Procédé pour fabriquer un article à filaments renforcés selon l'une quelconque des revendications précédentes, dans lequel le procédé consiste à recouvrir les bandes (18) de filaments continus d'une résine plastique liquide, à enrouler les bandes (18) selon des structures imbriquées autour d'un mandrin pour former un article tubulaire (10) et à durcir ensuite la résine plastique liquide jusqu'à un état solide, caractérisé en ce qu'une petite partie des filaments (22) dans au moins une des bandes (18) est électriquement conductrice, de sorte qu'ils établissent un contact électrique aux points où ils se croisent.

10. Procédé selon la revendication 9, caractérisé en ce qu'un brin (20) des filaments continus conducteurs (22) est disposé dans chaque bande (18).

11. Procédé selon la revendication 9 ou 10, caractérisé en ce que le procédé comprend les étapes cobsistant à découper l'article tubulaire (10) sur le mandrin pour former une feuille, et à retirer ensuite la feuille du mandrin.

*Fig.1*

*Fig.2*

*Fig.3*

1